**Europäisches Patentamt**

**European Patent Office**

**Office européen des brevets**

(19)

(11) Veröffentlichungsnummer: **0 504 457 A1**

## EUROPÄISCHE PATENTANMELDUNG

(12)

(21) Anmeldenummer: **91104386.7**

(22) Anmeldetag: **21.03.91**

(51) Int. Cl.5: **G06F 15/36**, G06F 15/40, G06F 9/44

(43) Veröffentlichungstag der Anmeldung:
**23.09.92 Patentblatt 92/39**

(84) Benannte Vertragsstaaten:
**AT BE CH DE DK ES FR GB GR IT LI LU NL SE**

(71) Anmelder: **Liebel, Franz-Peter, Dr.**
**Am Petersberg 61**
**W-4800 Bielefeld(DE)**

(72) Erfinder: **Liebel, Franz-Peter, Dr.**
**Am Petersberg 61**
**W-4800 Bielefeld(DE)**

(54) **Verfahren zur Ermittlung der Wahrscheinlichkeiten fehlerhafter Betriebszustände bei technischen und biologischen Systemen unter Verwendung von Einzelereignis-Wahrscheinlichkeiten mit einer höchstens einelementigen Bedingung.**

(57) Das Verfahren ermöglicht die Erstellung von Diagnose-Expertensystemen, die bei zahlreichen Anwendungsmöglichkeiten vor allem in der Medizin und in der Technik dazu dienen, aus einer vorgegebenen Symptommenge die Wahrscheinlichkeiten der möglichen Ursachen zu berechnen. Zudem besteht die Möglichkeit, die Wahrscheinlichkeiten aller Ereignisse eines kausalen Netzes zu bestimmen, sowie die Wahrscheinlichkeit dafür anzugeben, daß ein Ereignis A die Ursache für ein Ereignis B ist.

Die gestellten Aufgaben werden erreicht durch die Anwendung des dafür entwickelten allgemeinen Interpolationssatzes, der die Konstruktion einer Vielzahl von Interpolationsformeln für Wahrscheinlichkeiten der Form

$$p(H \mid E_1 \ldots E_h \; E'_{h+1} \ldots E'_k)$$

erlaubt.

Außerdem gelingt es, durch die Einführung plausibler Voraussetzungen und die konsequente Anwendung des sogenannten A.L-Satzes bzw. des A.L-Korollars alle Wahrscheinlichkeiten so zu zerlegen, daß ausschließlich Wahrscheinlichkeiten von Einzelereignissen mit einer höchstens ein-elementigen Bedingung benötigt werden.

EP 0 504 457 A1

## Inhalt

| | Seite |
|---|---|
| 1. Patentansprüche (Ansprüche 1 bis 10) | 1 |
| 2. Verwendbarkeit der Erfindung | 13 |
| 3. Stand der Technik und Vorteile des Verfahrens | 14 |
| 4. Darstellung der Lösung und Beispiele | 16 |
| 4.1. Interpolationsformeln zur Berechnung von bedingten Wahrscheinlichkeiten mit unsicheren Ereignissen im Bedingungsverbund | 16 |
| 4.2. Zerlegung von bedingten Wahrscheinlichkeiten | 28 |
| 4.3. Berechnung des Kausalnetzes | 38 |
| 4.4. Beispiel | 45 |
| Ende | 53 |

## 2. Verwendbarkeit der Erfindung

Die Erfindung wird im Bereich der Humanmedizin, der Tiermedizin und der Biologie verwendet. Durch den jetzt erreichten Vorteil, daß nur Wahrscheinlichkeiten von Einzelereignissen mit einer höchstens einelementigen Bedingung benötigt werden, ergeben sich vermehrte Einsatzmöglichkeiten im technischen Bereich, da die Wahrscheinlichkeitswerte auch dann gewonnen werden können, wenn nur wenige Systeme im Einsatz sind.

Die Erfindung dient zur Erstellung von Diagnose-Expertensystemen, die es ermöglichen, anhand der vorgegebenen Symptome oder Merkmale die Wahrscheinlichkeiten von kausal damit verknüpften Ereignissen zu berechnen. Damit verfügt man letztendlich über die Wahrscheinlichkeiten aller Ereignisse eines kausalen Netzes. Zudem vermag man die Wahrscheinlichkeit dafür anzugeben, daß ein Ereignis A die Ursache für ein Folge-Ereignis B ist.

Bedarf an Diagnose-Expertensystemen besteht vor allem in der Medizin; in der Technik wächst mit zunehmendem Komplexitätsgrad technischer Anlagen der Bedarf an Diagnose-Unterstützungssysten und Self-Check-Ausrüstungen, die Fehlersuche durchführen oder abkürzen.

## 3. Stand der Technik und Vorteile des Verfahrens

Vorbemerkung:

Der wesentliche Teil eines Diagnose-Expertensystems, der die Qualität und auch die Eigenheit des Systems bestimmt, ist die sogenannte Bewertungsfunktion, durch deren Anwendung sich aus einer Symptommenge die Wahrscheinlichkeiten möglicher Ursachen ergeben. Im Kern bestimmend ist somit, auf welche Weise eine solche Bewertungsfunktion die gestellte Aufgabe erfüllt, d.h konkret

- auf welche Weise in

$$p(H \mid E_1 \ldots E_h \; E'_{h+1} \ldots E'_k)$$

die Elemente mit '-Kennung in der Berechnung berücksichtigt werden, und
- auf welche Weise die bei der Berechnung anfallenden Wahrscheinlichkeiten mit einer unter Umständen hohen Ereignisanzahl in Wahrscheinlichkeiten zerlegt werden, die nur noch wenige Elemente enthalten.

3.1.

Zur Berechnung von Wahrscheinlichkeiten der Form

$$p(H \mid E_1 \ldots E_h \; E'_{h+1} \ldots E'_k)$$

wird bei den bisherigen Verfahren zur Elimination der Elemente mit '-Kennung der sogenannte L-Satz eingesetzt.

Verbesserung:

Das vorliegende Verfahren setzt für diese Aufgabe den dafür entwickelten allgemeinen Interpolationssatz ein. Mit Hilfe dieses Satzes kann eine Interpolationsformel so konstruiert werden, daß unter Nutzung des zugrunde gelegten Kausalnetzes jedes $E'_i$ aus

$$E'_{h+1}, \ldots, E'_k$$

einen solchen Beitrag zur Wahrscheinlichkeit von H bewirkt, wie er logischen Grundsätzen und intuitiver Einschätzung entspricht. Durch die Vielfalt der durch den allgemeinen Interpolationssatz ermöglichten Formeln erreicht man bei der Interpolation die größtmögliche Präzision.

3.2.

Bei bestehenden Konzeptionen verwendet man bedingte Wahrscheinlichkeiten von Einzelereignissen, die unter Umständen zahlreiche Elemente im Bedingungsverbund aufweisen, so daß erhebliche Probleme bei der Stichprobenerhebung auftreten können. Diese Probleme können bei umfangreichen Bedingungsverbunden die Durchführbarkeit des Verfahrens vereiteln oder in den Anwendungsmöglichkeiten erheblich einschränken.

Verbesserung:

Das vorliegende Verfahren verwendet ausschließlich Wahrscheinlichkeiten von Einzelereignissen mit einer höchstens ein-elementigen Bedingung. Erst diese Eigenschaft ermöglicht die Erstellung leistungsfähiger probabilistischer Diagnose-Expertensysteme mit extrem geringem statistischem Aufwand.

4. Darstellung der Lösung und Beispiele

4.1. Interpolationsformeln zur Berechnung von bedingten Wahrscheinlichkeiten mit unsicheren Ereignissen im Bedingungsverbund.

Es werden Formeln zur Berechnung von Wahrscheinlichkeiten der Form

$$p(H \mid E_1 \ E_2 \ \dots \ E_h \ E'_{h+1} \ \dots \ E'_k)$$

angegeben, wobei die Ereignisse $E_1$, ..., $E_h$ mit Sicherheit, d.h. negiert oder unnegiert vorliegen, während die Ereignisse

$$E'_{h+1} \ , \ \dots, \ E'_k$$

eine Zutreffenswahrscheinlichkeit

$$0 \ \leq \ p(E_i \mid E'_i) \ \leq \ 1 \ ,$$

$i = h+1,..., k$ besitzen und demzufolge eine '-Kennung tragen. Als eine Anwendung der Formeln kann für ein vorgegebenes Kausalnetz, das zu den Netzknoten mit bekannter Zutreffenswahrscheinlichkeit eine beliebige Anzahl m von Netzknoten mit unbekannter Zutreffenswahrscheinlichkeit enthält, ein Gleichungssystem mit m Unbekannten aufgestellt werden, dessen Auflösung die noch fehlenden Wahrscheinlichkeiten liefert.

Im weiteren werden Ausdrücke der Form

$$p(E_i \mid V_{E_i})$$

verwendet, wobei

$$\overset{\lor}{\underset{i}{E}}$$

einen auch leer zugelassenen Verbund bezeichnet, der aus

$$(E_1 \ldots E_h \; E'_{h+1} \; \ldots \; E'_k)$$

dadurch entsteht, daß $E'_i$ und beliebige weitere Elemente daraus entfernt werden.

Für die Interpolationsfunktionen zur Berechnung von

$$p(H \mid E_1 \ldots E_h \; E'_{h+1} \ldots E'_k)$$

wird gefordert, daß diese Größe in Abhängigkeit von den Variablen

$$p(E_{h+1} \mid E'_{h+1}), \ldots, p(E_k \mid E'_k)$$

vorliegt, und daß die Interpolationsfunktionen durch die nachfolgend angegebenen drei Interpolationspunkte verlaufen.

Es wird gefordert, daß für alle $E'_i$, $i = h + 1, \ldots, k$ gilt:

1. Interpolationspunkt:

$$p(H \mid E_1 \ldots E_h \; E'_{h+1} \ldots E'_i \ldots E'_k) = p(H \mid E_1 \ldots E_h \; E'_{h+1} \ldots \overline{E}_i \ldots E'_k)$$

für

$$p(E_i \mid E'_i) = 0.$$

2. Interpolationspunkt:

$$p(H \mid E_1 \ldots E_h \; E'_{h+1} \ldots E'_i \ldots E'_k) = p(H \mid E_1 \ldots E_h \; E'_{h+1} \ldots E_i \ldots E'_k)$$

für

$$p(E_i \mid E'_i) = 1.$$

3. Interpolationspunkt:

$$p(H \mid E_1 \ldots E_h \; E'_{h+1} \ldots E'_i \ldots E'_k) = p(H \mid E_1 \ldots E_h \; E'_{h+1} \ldots \cancel{E'_i} \ldots E'_k)$$

für

$$p(E_i \mid E'_i) = p(E_i \mid \bigvee_{E_i}).$$

Hierbei kann

$$\bigvee_{E_i}$$

beliebig gewählt werden und bestimmt so die gewünschte Interpolation.

$$\bigvee_{E_{h+1}}, \ldots, \bigvee_{E_k}$$

seien also beliebig gewählt. Die Interpolationsfunktionen der nachfolgenden Form erfüllen, wie durch elementare Rechnung nachgeprüft werden kann, die geforderten drei Interpolationspunkte.

Allgemeiner Interpolationssatz:

$E_1, \ldots, E_k$ seien Ereignisse mit

$$(1) \quad p_i = p(E_i \mid E'_i) \in \{0,1\} \quad \text{für } i = 1, \ldots, h,$$

$$(2) \quad 0 \leq p(E_i \mid E'_i) \leq 1 \quad \text{für } i = h+1, \ldots, k,$$

$$(3) \quad p(E'_1 \ldots E'_k) \neq 0.$$

$$\bigvee_{E_i}$$

sei ein beliebiger, auch leer zugelassener Teilverbund von

$$(E_1 \ldots E_h \; E'_{h+1} \ldots E'_{i-1} \; E'_{i+1} \ldots E'_k).$$

Dann genügt folgende Gleichung den geforderten drei Interpolationspunkten:

$$p(H \mid E_1^{(p_1)} \ldots E_h^{(p_h)} \; E'_{h+1} \ldots E'_k) = \qquad (4.1.1)$$

$$\frac{\displaystyle\sum_{q_{h+1},\ldots,q_k=0,1} p(H \; E_1^{(p_1)} \ldots E_h^{(p_h)} \; E_{h+1}^{(q_{h+1})} \ldots E_k^{(q_k)}) \cdot \prod_{i=h+1}^{k} \frac{p(E_i^{(q_i)} \mid E'_i)}{p(E_i^{(q_i)} \mid V_{E_i})}}{\displaystyle\sum_{q_{h+1},\ldots,q_k=0,1} p(E_1^{(p_1)} \ldots E_h^{(p_h)} \; E_{h+1}^{(q_{h+1})} \ldots E_k^{(q_k)}) \cdot \prod_{i=h+1}^{k} \frac{p(E_i^{(q_i)} \mid E'_i)}{p(E_i^{(q_i)} \mid V_{E_i})}}$$

$$\text{mit } E_i^{(0)} = \overline{E_i} \text{ und } E_i^{(1)} = E_i \text{ für } i = 1, \ldots, k.$$

Aus Glg.(4.1.1) erhält man für

$$V_{E_{h+1}} = V_{E_{h+2}} = \ldots = V_{E_k} = \emptyset$$

den nachfolgenden Satz, der im Hinblick auf seine Entstehungsgeschichte und wegen der ursprünglichen Schreibweise als L-Satz bezeichnet wird. Der L-Satz, der also ein Spezialfall des allgemeinen Interpolationssatzes ist, wird wegen der nunmehr anders gestalteten Formulierung vollständig angeschrieben.

L-Satz:

$E_1, \ldots, E_k$ seien Ereignisse mit

$$(1) \quad p_i = p(E_i \mid E'_i) \in \{0,1\} \text{ für } i = 1, \ldots, h,$$

$$(2) \quad 0 \leq p(E_i \mid E'_i) \leq 1 \text{ für } i = h+1, \ldots, k,$$

$$(3) \quad p(E'_1 \ldots E'_k) \neq 0.$$

Dann genügt mit

$$V_{E_i} := \emptyset,$$

$i = h+1,\ldots,k$, die folgende Gleichung den geforderten drei Interpolationspunkten:

$$p(H \mid E_1^{(p_1)} \ldots E_h^{(p_h)} E'_{h+1} \ldots E'_k) = \qquad (4.1.2)$$

$$\frac{\displaystyle\sum_{q_{h+1},\ldots,q_k=0,1} p(H\, E_1^{(p_1)}\ldots E_h^{(p_h)} E_{h+1}^{(q_{h+1})}\ldots E_k^{(q_k)}) \cdot \prod_{i=h+1}^{k} \frac{p(E_i^{(q_i)} \mid E'_i)}{p(E_i^{(q_i)})}}{\displaystyle\sum_{q_{h+1},\ldots,q_k=0,1} p(E_1^{(p_1)}\ldots E_h^{(p_h)} E_{h+1}^{(q_{h+1})}\ldots E_k^{(q_k)}) \cdot \prod_{i=h+1}^{k} \frac{p(E_i^{(q_i)} \mid E'_i)}{p(E_i^{(q_i)})}},$$

$$\text{mit } E_i^{(0)} = \bar{E}_i \quad \text{und} \quad E_i^{(1)} = E_i \quad \text{für } i = 1, \ldots, k.$$

Enthalten die

$$\overset{\cup}{E}_{h+1}, \ldots, \overset{\cup}{E}_{k}$$

die jeweils größtmögliche Anzahl von Elementen, so werden diese Verbunde mit

$$\overset{\cup}{E}_{h+1}, \text{max} \;, \ldots, \; \overset{\cup}{E}_{k}, \text{max}$$

bezeichnet. Für ein beliebiges $E'_i$ aus

$$\left\{ E'_{h+1}, \ldots, E'_k \right\}$$

stehen also in dem in

$$p(E_i \mid \overset{\cup}{E}_i, \text{max})$$

enthaltenen Verbund

$$\overset{\cup}{E}_i, \text{max}$$

mit Ausnahme von $E'_i$ alle Elemente aus

$$(E_1 \ldots E_h \ E'_{h+1} \ldots E'_k)$$

in genau der vorliegenden Negierung bzw. '-Kennung. Der damit aus dem allgemeinen Interpolationssatz sich ergebende weitere Spezialfall erhält, da er zusammen mit dem L-Satz u.a. zur Berechnung kausaler Netze dient und deshalb häufig angesprochen werden muß, den gesonderten Namen $V_{max}$-Interpolation.

Aus der $V_{max}$-Interpolation ergibt sich eine besonders einfache Beziehung, wenn im Bedingungsverbund der zu berechnenden bedingten Wahrscheinlichkeit nur ein einziges '-gekennzeichnetes Ereignis, etwa

$$E'_{h+1}$$

vorliegt. Durch die dann mögliche Vereinfachung wird die $V_{max}$ - Interpolation linear.

$V_{max}$ -Interpolation bei nur einem unsicheren Ereignis:

Aus Glg.(4.1.1) ergibt sich mit

$$E'_{h+2} := \ldots := E'_k := \emptyset$$

und

$$V_{E_{h+1}} := V_{E_{h+1},max} :$$

$$p(H \,|\, E_1^{(p_1)} \ldots E_h^{(p_h)} E'_{h+1}) = \qquad\qquad (4.1.3)$$

$$p(H | E_1^{(p_1)} \ldots E_h^{(p_h)} E_{h+1}) \cdot p(E_{h+1} | E'_{h+1}) +$$

$$p(H | E_1^{(p_1)} \ldots E_h^{(p_h)} \overline{E}_{h+1}) \cdot p(\overline{E}_{h+1} | E'_{h+1}).$$

Einfache Verhältnisse ergeben sich auch, wenn die Ereignisse in

$$(E_1 \ldots E_h \ E'_{h+1} \ldots E'_k)$$

stochastisch unabhängig sind. Dann ergibt sich eine Interpolation, die bezüglich der einzelnen unabhängigen Variablen ebenfalls linear ist.

Lineare Interpolation bei stochastischer Unabhängigkeit der bedingenden Ereignisse:

Aus Glg.(4.1.1) ergibt sich bei Unhängigkeit der Ereignisse in

$$(E_1 \ldots E_h \; E'_{h+1} \ldots E'_k)$$

und bei beliebigem

$$\bigvee_{E_i},$$

$i = h+1, \ldots, k$:

$$p(H \mid E_1^{(p_1)} \ldots E_h^{(p_h)} \; E'_{h+1} \ldots E'_k) = \qquad\qquad (4.1.4)$$

$$\sum_{q_{h+1},\ldots,q_k=0,1} p(H \mid E_1^{(p_1)} \ldots E_h^{(p_h)} \; E_{h+1}^{(q_{h+1})} \ldots E_k^{(q_k)}) \cdot \prod_{i=h+1}^{k} p(E_i^{(q_i)} \mid E'_i).$$

Jedes einzelne

$$\bigvee_{E_i}$$

der Glg.(4.1.1) kann den Erfordernissen entsprechend gewählt werden. Es müssen also Kriterien erstellt werden, die solche Erfordernisse und die sich daraus ergebende Interpolation festlegen. Sei hierzu p(H | U F K I J) die zu berechnende Wahrscheinlichkeit, wobei U, F, K, I und J Verbunde mit negierten, unnegierten oder '-gekennzeichneten Elementen bezeichnen. Im einzelnen sind:

U     Verbund mit beliebigen Elemente aus der Menge der Ursachen von H. Es sei $U := (U_1 \ldots U_a)$.

F     Verbund mit beliebigen Folge-Ereignissen von H. Es sei $F := (F_1 \ldots F_b)$.

K     Verbund mit beliebigen, von H verschiedenen Elementen, die Ursache für Elemente aus F sind. Es sei $K := (K_1 \ldots K_c)$.
(K erinnert an "Komkurrierend zu H".)

I     Verbund mit beliebigen Ereignissen, die auf H hinführende Kausalverbindungen inhibitorisch beeinflussen. Es sei $I := (I_1 \ldots I_d)$.

J     Verbund mit beliebigen Ereignissen, die auf $F_1,\ldots,F_b$ hinführende Kausalverbindungen inhibitorisch beeinflussen. Es sei $J := (J_1 \ldots J_e)$.

Zur Festlegung von Interpolationsfunktionen werden Wahrscheinlichkeiten der Form

$$(1) \quad p(H \mid F'_1 \ldots F'_b \; K \; J) \quad \text{und}$$

$$(2) \quad p(F_{j_o} \mid F'_1 \ldots F''_{j_o} \ldots F'_b \; K \; J)$$

betrachtet, mit beliebigem

$$F'_{j_o}$$

aus $F'_i, ..., F'_b$.

Es wird festgelegt, daß bei den Uebergängen

$$p(H \mid F'_1 \ldots \cancel{F'_j} \ldots F'_b) \quad ===> \quad p(H \mid F'_1 \ldots F'_j \ldots F'_b) \quad und$$

$$p(F_{j_o} \mid F'_1 \ldots \cancel{F'_{j_o}} \ldots \cancel{F'_j} \ldots F'_b) ===> p(F_{j_o} \mid F'_1 \ldots \cancel{F'_{j_o}} \ldots F'_j \ldots F'_b),$$

d.h. bei Aufnahme eines noch nicht vorhandenen beliebigen Elementes $F_j$ aus $F$ in den jeweiligen Bedingungsverbund, folgende Veränderungen erfolgen:

- Falls

$$p(F_j \mid F'_j) < p(F_j),$$

dann niedrigere Wahrscheinlichkeit.
- Falls

$$p(F_j \mid F'_j) > p(F_j \mid V_{F_j,max}),$$

dann höhere Wahrscheinlichkeit.

$$(V_{F_j,max}$$

bezieht sich stets auf den Bedingungsverbund der aktuell berechneten bedingten Wahrscheinlichkeit.)
- Falls

$$p(F_j) \leq p(F_j \mid F'_j) \leq p(F_j \mid V_{F_j,max}),$$

dann keine Veränderung.

Für einen beliebigen, im allgemeinen Interpolationssatz erscheinenden Quotienten $Q_i$ mit

$$Q_i := \frac{p(E_i \mid E_i')}{p(E_i \mid V_{E_i})}$$

(bei beliebigem Negierungsstatus von $E_i$)

stehen im Falle, daß $E_i$ zu dem Verbund F gehört, somit folgende Möglichkeiten zur Verfügung:

Wahlmöglichkeit I:

Falls

$$p(E_i \mid E_i') > p(E_i \mid V_{E_i,max}),$$

dann

$$Q_i := \frac{p(E_i \mid E_i')}{p(E_i \mid V_{E_i,max})} \cdot$$

Die Prämisse gilt als erfüllt, wenn die Kausalstruktur außer den in

$$V_{E_i,max}$$

enthaltenen Elementen solche Ereignisse aufweist, daß der dadurch ausgeübte aufwertende Einfluß auf $E_i$ gegenüber dem abwertenden Einfluß auf $E_i$ überwiegt.

Wahlmöglichkeit II:

Falls

$$p(E_i) \leq p(E_i \mid E_i') \leq p(E_i \mid V_{E_i,max}),$$

dann $Q_i := 1$.
Die Prämisse gilt als erfüllt, wenn die Kausalstruktur außer den in

$$\overset{\lor}{E}_i,\max$$

enthaltenen Elementen solche Ereignisse aufweist, daß der dadurch ausgeübte abwertende Einfluß auf $E_i$ gegenüber dem aufwertenden Einfluß auf $E_i$ überwiegt, ohne daß die a priori-Wahrscheinlichkeit $p(E_i)$ unterschritten wird.

Wahlmöglichkeit III:

Falls

$$p(E_i \mid E'_i) < p(E_i) \; ,$$

dann

$$Q_i := \frac{p(E_i \mid E'_i)}{p(E_i)} \; .$$

Die Prämisse gilt als erfüllt, wenn die Kausalstruktur solche Ereignisse aufweist, daß der insgesamt auf $E_i$ ausgeübte ab- gegenüber dem aufwertenden Einfluß überwiegt, so daß die a priori-Wahrscheinlichkeit $p(E_i)$ unterschritten wird.

Vereinfachungsmöglichkeit I:

Falls

$$Q_i := \frac{p(E_i \mid E'_i)}{p(E_i \mid V_{E_i})} \quad \text{und} \quad p(E_i \mid V_{E_i}) = p(E_i),$$

dann

$$Q_i := \frac{p(E_i \mid E'_i)}{p(E_i)} \; .$$

Eine solche Vereinfachungsmöglichkeit infolge stochastischer Unabhängigkeit von $E_i$ und konkretem

13

$$\overset{\cup}{E}_i$$

kann unter Umständen auch bei ungefährem Vorliegen eingesetzt werden. Sind alle Elemente aus $\{E_i\}$ und

$$\overset{\cup}{E}_i, \max$$

stochastisch unabhängig, so führt dies zu der besonders vorteilhaften Glg.(4.1.4).

Vereinfachungsmöglichkeit II:

Ist $Q_i = 1$, so können alle Ereignisse, die nur deshalb im Bedingungsverbund der zu berechnenden Wahrscheinlichkeit stehen, weil sie eine Ursache für $E_i$ sind, zusammen mit den Inhibitoren der auf $E_i$ hinführenden Kausalverweise aus dem Bedingungsverbund entfernt werden.

Vereinfachungsmöglichkeit III:

Ist

$$p(E_i \mid E_i') < p(E_i)$$

bei vergleichsweise kleinem $p(E_i)$, so vermindert es die Genauigkeit nur unwesentlich, wenn alle Ereignisse, die nur deshalb in der Bedingung der zu berechnenden Wahrscheinlichkeit erscheinen, weil sie eine Ursache für $E_i$ sind, zusammen mit den Inhibitoren der auf $E_i$ hinführenden Kausalverweise aus dem Bedingungsbund entfernt werden.

(Die Vereinfachungsmöglichkeit III ergibt sich aus dem sogenannten A.L-Korollar 2 , wonach $p(A\,B|\overline{C}) = p(A|\overline{C}) \cdot p(B|\overline{C})$ gilt, wenn A und B selbstständige Ursachen von C sind.)

Die Wahrscheinlichkeiten (1) und (2) enthalten außerdem noch die Verbunde K und J, die ebenfalls Ereignisse mit einer '-Kennung enthalten können. Für

$$E_i'$$

aus K und J wird angesetzt:

$$\frac{p(E_i \mid E_i')}{p(E_i \mid \underset{E_i}{\cup})} := \frac{p(E_i \mid E_i'')}{p(E_i)} ,$$

$E_i$ aus K oder J.

(Die Berücksichtigung der Elemente aus U erfolgt entsprechend zu den Ausführungen in Abschnitt 4.3. )

Bei der Berechnung einer beliebigen bedingten Wahrscheinlichkeit wird also unter Heranziehung der zugrunde liegenden Kausalstruktur eine solche Gestalt für die Glg.(4.1.1) erstellt, daß die damit erreichte Interpolation sowohl logischen Grundsätzen als auch intuitiver Einschätzung entspricht.

(Beispiel siehe Abschnitt 4.4.)

## 4.2. Zerlegung von Wahrscheinlichkeiten

Es bezeichnen:

L            Beliebiges Ereignis.

URS(L)      Menge der unmittelbaren Ursachen von L.

A            Beliebig gewählter, aber $\overline{\text{feststehender}}$ Verbund aus unnegierten Ereignissen von URS(L) mit $A := (A_1 \ldots A_k)$.

X            Beliebiger Verbund mit negierten oder unnegierten Ereignissen aus URS(L)\{Elemente in A}.

A.L         Kausaler Vorgang "A erzeugt L". Ist A ein Verbund mit $A := (A_1 \ldots A_k)$, so bedeutet A.L: "$A_1$ erzeugt L" v ... v "$A_k$ erzeugt L".

INH(A.L)     Menge der Ereignisse, die auf $A_1.L$, ..., $A_k.L$ inhibitorisch einwirken.

INH(L)      Menge der Ereignisse, die auf L hinführende $\overline{\text{Kausalverbindungen}}$ inhibitorisch beeinflussen.

B            Verbund mit beliebigen unnegierten Elementen aus URS(L)\{$\overline{\text{Elemente}}$ in A}.

C            Verbund mit beliebigen negierten Elementen aus URS(L)\{Elemente in A und B}.

D            Beliebiger Verbund mit negierten oder unnegierten Elementen aus INH(A.L).

$\hat{X}$            Beliebiger Verbund mit negierten oder unnegierten Elementen aus URS(L)\{Elemente in A, B, C}.

## Definition

A heißt selbstständige Ursache von L, falls A für alle X die nachfolgenden vier Voraussetzungen erfüllt:

## Voraussetzung 1

$$p((A.L)\,(X.L) \mid A\,X) = p(A.L \mid A\,X) \cdot p(X.L \mid A\,X).$$

## Voraussetzung 2

$$p(A.L \mid A\,X) = p(A.L \mid A).$$

## Voraussetzung 3

$$p(X.L \mid A\,X) = p(X.L \mid \overline{A}_1 \ldots \overline{A}_k\,X).$$

## Voraussetzung 4

$$p(X \mid A) = p(X \mid \overline{A}_1 \ldots \overline{A}_k).$$

## A.L - Satz:

Unter der Voraussetzung, daß A eine selbstständige Ursache von L ist, gilt mit $A := (A_1 \ldots A_k)$ :

$$p(A.L \mid A) \quad = \quad \frac{p(L \mid A) - p(L \mid \overline{A}_1 \ldots \overline{A}_k)}{p(\overline{L} \mid \overline{A}_1 \ldots \overline{A}_k)} \cdot$$

Statt der Voraussetzungen 1 bis 4 können die darin enthaltenen und im Vergleich dazu leichter erfüllbaren Voraussetzungen $\hat{1}$ bis $\hat{4}$ gefordert werden, die nachstehend formuliert sind.

Für beliebiges A und für alle $\hat{X}$ gilt:

## Voraussetzung $\hat{1}$

$$p((A.L)\,((B\hat{X}).L) \mid D\,A\,C\,B\,\hat{X}) = p(A.L \mid D\,A\,C\,B\,\hat{X}) \cdot p((B\,\hat{X}).L \mid D\,A\,C\,B\,\hat{X}).$$

Voraussetzung $\hat{2}$

$p(A.L \mid D\ A\ C\ B\ \hat{X}) = p(A.L \mid D\ A\ C\ B)$.

Voraussetzung $\hat{3}$

$p((B\ \hat{X}).L \mid D\ A\ C\ B\ \hat{X}) = p((B\ \hat{X}).L \mid D\ \overline{A}_1\ ...\ \overline{A}_k\ C\ B\ \hat{X})$.

Voraussetzung $\hat{4}$

$p(B\ \hat{X} \mid D\ A\ C) = p(B\ \hat{X} \mid D\ \overline{A}_1\ ...\ \overline{A}_k\ C)$.

Definition

Ein aus unnegierten Elementen von URS(L) bestehender Verbund A heißt selbstständige Ursache von L unter der Bedingung (B C D), falls A die Voraussetzungen $\hat{1}$ bis $\hat{4}$ erfüllt.

A.L-Korollar:

A ist eine selbstständige Ursache von L unter der Bedingung (B C D).
A, B, C, D, L schließen sich nicht gegenseitig aus. Dann gilt:

$$p(A.L \mid A\ B\ C\ D) = \frac{p(L \mid A\ B\ C\ D) - p(L \mid \overline{A}_1\ ...\ \overline{A}_k\ B\ C\ D)}{p(\overline{L} \mid \overline{A}_1\ ...\ \overline{A}_k\ B\ C\ D)} .$$

Es sei $p(H \mid U_1... U_a\ I_1... I_d)$ die zu berechnende Wahrscheinlichkeit, mit sicheren, d.h. negierten oder unnegierten Ereignissen in der Bedingung. $U_1,...,U_a$ sind selbstständige Ursachen von H, weitere Ursachen von H existieren nicht. Der Verbund $(I_1...I_d)$ besteht aus beliebigen Elementen von INH(H). Dann gilt:

$$p(H \mid U_1\ ...\ U_a\ I_1\ ...\ I_d) = \qquad \cdot \qquad\qquad (4.2.1)$$

$$1 - \overline{\prod_{i=1}^{a}}\ (1 - p(U_i.H \mid U_1\ ...\ U_a\ I_1\ ...\ I_d)).$$

Die Glg.(4.2.1) gilt, da die Ereignisse $U_i.H$, $i = 1,...,a$ unter der Bedingung $(U_1... U_a\ I_1... I_d)$ stochastisch unabhängig sind. Bezeichnet

$$U_i.H^{I}$$

einen Teilverbund von $(I_1... I_d)$, bestehend aus den Inhibitoren für $U_i.H$, so gilt unter Anwendung des A.L-Korollars für $i = 1,...,a$:

16

$$p(U_i.H \mid U_1 \ldots U_a I_1 \ldots I_d) = p(U_i.H \mid U_i I_{U_i.H}) \qquad (4.2.2)$$

mit

$$p(U_i.H \mid U_i I_{U_i.H}) = \qquad\qquad (4.2.3)$$

$$\begin{cases} \dfrac{p(H \mid U_i I_{U_i.H}) - p(H \mid \overline{U}_i I_{U_i.H})}{p(\overline{H} \mid \overline{U}_i I_{U_i.H})} & , \text{falls } U_i \text{ unnegiert} \\\\ 0 & , \text{sonst.} \end{cases}$$

Sei nun H ein beliebiges Ereignis, $U_1$ sei eine beliebig gewählte Ursache von H, und für

$$I_{U_1.H},$$

den Verbund mit inhibitorisch auf $U_1$.H wirkenden Ereignissen gelte

$$I_{U_1.H} := (I_1 \ldots I_x),$$

$I_1,\ldots,I_x \in INH(H)$.

Voraussetzungen

a) Die Elemente der Vereinigungsmenge, gebildet aus $U_1$ und den Ereignissen in

$$I_{U_1.H},$$

sind stochastisch unbhängig.
(Die Voraussetzung a) ergibt sich aus der Voraussetzung III des folgenden Abschnitts 4.3.)
b) Die Elemente in

$$I_{U_1.H}$$

sind unter der Bedingung
($U_1$ ($U_1$.H)) stochastisch unabhängig.

c) Die Elemente der Vereinigungsmenge, gebildet aus H und den Ereignissen in

$$\bigcup_{1} I .H \; ,$$

sind unter der Bedingung $\overline{U}_1$ stochastisch unabhängig.

(Bei Gültigkeit der Voraussetzung a) ist die Voraussetzung c) eine Folge des Zusammenwirkens von H, $\overline{U}_1$ und

$$\bigcup_{1} I .H \; .)$$

Damit ergibt sich:

$$p(U_1.H \mid U_1 \; I_{U_1.H})$$

$$:= \; p(U_1.H \mid U_1 \; I_1...I_x)$$

$$= \; \frac{p((U_1.H) \; U_1 \; I_1...I_x)}{p(U_1 \; I_1...I_x)}$$

$$\underset{a)}{=} \; \frac{p(I_1...I_x \mid (U_1.H) \; U_1) \cdot p((U_1.H) \; U_1)}{p(U_1) \cdot p(I_1) \cdot \; ... \; \cdot p(I_x)}$$

$$\underset{b)}{=} \; \frac{p(I_1 \mid (U_1.H) \; U_1)}{p(I_1)} \cdot ... \cdot \frac{p(I_x \mid (U_1.H) \; U_1)}{p(I_x)} \cdot p(U_1.H \mid U_1)$$

$$\underset{a)}{=} \; \frac{p(U_1.H \mid U_1 \; I_1)}{p(U_1.H \mid U_1)} \cdot ... \cdot \frac{p(U_1.H \mid U_1 \; I_x)}{p(U_1.H \mid U_1)} \cdot p(U_1.H \mid U_1) \qquad (4.2.4)$$

Die Berechnung der Quotienten in Glg.(4.2.4) wird bei beliebig gewähltem $I_1$ aus $I_1,...,I_x$ unter Anwendung des A.L-Satzes und des A.L-Korollars wie folgt durchgeführt:

$$\frac{p(U_1 . H \mid U_1 \ I_1)}{p(U_1 . H \mid U_1)}$$

$$\underset{c)}{=} \frac{p(H \mid U_1 \ I_1) - p(H \mid \bar{U}_1)}{p(\bar{H} \mid \bar{U}_1)} \cdot \frac{p(\bar{H} \mid \bar{U}_1)}{p(H \mid U_1) - p(H \mid \bar{U}_1)}$$

$$= \frac{p(H \mid U_1 \ I_1) - p(H \mid \bar{U}_1)}{p(H \mid U_1) - p(H \mid \bar{U}_1)} \qquad (4.2.5)$$

In Glg.(4.2.5) kann $p(H \mid U_1 \ I_1)$ bei Bedarf wie folgt weiter zerlegt werden:

$$p(H \mid U_1 \ I_1)$$

$$\underset{a)}{=} \frac{p(H \ I_1) - p(H \ I_1 \ \bar{U}_1)}{p(U_1) \cdot p(I_1)}$$

$$\underset{c)}{=} \frac{p(H \ I_1) - p(I_1 \mid \bar{U}_1) \ p(H \mid \bar{U}_1) \cdot p(\bar{U}_1)}{p(U_1) \cdot p(I_1)}$$

$$\underset{a)}{=} \frac{p(H \ I_1) - p(H \mid \bar{U}_1) \cdot p(\bar{U}_1)}{p(U_1)} \cdot \qquad (4.2.6)$$

Mit der Beziehung (4.2.6) folgt aus Glg.(4.2.5):

$$\frac{p(U_1 . H \mid U_1 \, I_1)}{p(U_1 . H \mid U_1)} = \qquad\qquad (4.2.7)$$

$$\frac{\dfrac{p(H \mid I_1) - p(H \mid \overline{U}_1) \cdot p(\overline{U}_1)}{p(U_1)} - p(H \mid \overline{U}_1)}{p(H \mid U_1) \qquad - p(H \mid \overline{U}_1)} \cdot$$

In Glg.(4.2.7) ist sofort zu erkennen, daß die rechte Seite für $I_1 := \emptyset$ den Wert Eins besitzt. Zur Erhaltung dieser Uebersicht wird keine weitere Umformung der Gleichung vorgenommen.

Beispiel:

p(H | U1 U2 U3 I1 I2) sei die zu berechnende Wahrscheinlichkeit. U1, U2 und U3 sind selbstständige Ursachen von H, weitere Ursachen von H existieren nicht. I1 und I2 sind Inhibitoren für U3.H. Dann folgt:

$$p(H \mid U1 \; U2 \; U3 \; I1 \; I3) = 1 - (1 - p(U1.H \mid U1))$$
$$\cdot (1 - p(U2.H \mid U2))$$
$$\cdot (1 - p(U3.H \mid U3 \; I1 \; I2)),$$

wobei exemplarisch gilt:

$$p(U3.H \mid U3 \; I1 \; I2)$$

$$= \frac{p(U3.H \mid U3 \; I1)}{p(U3.H \mid U3)} \cdot \frac{p(U3.H \mid U3 \; I2)}{p(U3.H \mid U3)} \cdot p(U3.H \mid U3)$$

$$= \frac{p(H \mid U3 \; I1) - p(H \mid \overline{U3})}{p(H \mid U3) - p(H \mid \overline{U3})} \cdot \frac{p(H \mid U3 \; I2) - p(H \mid \overline{U3})}{p(H \mid U3) - p(H \mid \overline{U3})} \cdot$$

$$\cdot \frac{p(H \mid U3) - p(H \mid \overline{U3})}{p(\overline{H} \mid \overline{U3})}$$

$$= \frac{p(H \mid I1) - p(H \mid \overline{U3})}{(p(H \mid U3) - p(H \mid \overline{U3})) \cdot p(U3)} \cdot \frac{p(H \mid I2) - p(H \mid \overline{U3})}{(p(H \mid U3) - p(H \mid \overline{U3})) \cdot p(U3)} \cdot$$

$$\cdot \frac{p(H \mid U3) - p(H \mid \overline{U3})}{p(\overline{H} \mid \overline{U3})} \cdot$$

Mit den Gleichungen (4.2.1) bis (4.2.7) ist erreicht, daß die Berechnung einer Wahrscheinlichkeit der Form $p(H \mid U_1 \ldots U_a \; I_1 \ldots I_d)$, die unter Umständen zahlreiche Ereignisse im Bedingungsverbund enthält, mit Hilfe von Einzelereignis-Wahrscheinlichkeiten erfolgt, die eine höchstens ein-elementige Bedingung aufweisen. Die benötigten Wahrscheinlichkeiten sind dann diejenigen Größen, die sich bei Anwendung der Glg.-(4.2.7) ergeben.

Rechenhinweis:

Es seien F1 und F2 beliebige Ereignisse. K1, K2, K3 sei die Menge sämtlicher Ursachen von F1 und F2 , die als selbstständige Ursachen von F1 bzw. F2 vorausgesetzt werden.

Ist nun die Wahrscheinlichkeit eines Verbundes zu ermitteln, der beliebige Ereignisse enthält, jedoch nicht alle unmittelbaren Ursachen dieser Ereignisse, so kann eine Erweiterung analog zu folgendem Beispiel durchgeführt werden:

$$p(F1 \; F2 \; K1) = p(F1 \; F2 \; K1 \; K2 \; K3) + p(F1 \; F2 \; K1 \; K2 \; \overline{K3}) +$$

$$p(F1 \; F2 \; K1 \; \overline{K2} \; K3) + p(F1 \; F2 \; K1 \; \overline{K2} \; \overline{K3})$$

$$= p(F1 \; F2 \mid K1 \; K2 \; K3) \cdot p(K1) \cdot p(K2) \cdot p(K3) +$$

$$p(F1 \; F2 \mid K1 \; K2 \; \overline{K3}) \cdot p(K1) \cdot p(K2) \cdot p(\overline{K3}) +$$

$$p(F1 \; F2 \mid K1 \; \overline{K2} \; K3) \cdot p(K1) \cdot p(\overline{K2}) \cdot p(K3) +$$

$$p(F1 \; F2 \mid K1 \; \overline{K2} \; \overline{K3}) \cdot p(K1) \cdot p(\overline{K2}) \cdot p(\overline{K3}).$$

Da K1, K2 und K3 selbständige Ursachen von F1 bzw. F2 sind, und da die Voraussetzung III des Abschnitts 4.3 gilt, folgt die stochastische Unabhängigkeit von F1 und F2 unter einer Bedingung, die alle Ursachen von F1 und F2 enthält.

(Wegen ihrer Bedeutung ist diese Eigenschaft in Abschnitt 4.3 gesondert als Voraussetzung II formuliert.) Damit erhält man:

$$p(F1\ F2\ K1) \qquad\qquad (4.2.8)$$

$$= \quad p(F1 \mid K1\ K2\ K3)\cdot p(F2 \mid K1\ K2\ K3)\cdot p(K1)\cdot p(K2)\cdot p(K3) \ +$$

$$p(F1 \mid K1\ K2\ \overline{K3})\cdot p(F2 \mid K1\ K2\ \overline{K3})\cdot p(K1)\cdot p(K2)\cdot p(\overline{K3}) \ +$$

$$p(F1 \mid K1\ \overline{K2}\ K3)\cdot p(F2 \mid K1\ \overline{K2}\ K3)\cdot p(K1)\cdot p(\overline{K2})\cdot p(K3) \ +$$

$$p(F1 \mid K1\ \overline{K2}\ \overline{K3})\cdot p(F2 \mid K1\ \overline{K2}\ \overline{K3})\cdot p(K1)\cdot p(\overline{K2})\cdot p(\overline{K3}) .$$

Die weitere Berechnung der Glg.(4.2.8) erfolgt dann mit Hilfe der Glgn.(4.2.1) bis (4.2.7).

4.3. Berechnung des Kausalnetzes

Für jedes Element aus der Menge der Netzknoten mit unbekannter Zutreffenswahrscheinlichkeit werden sogenannte Wertungsgleichungen erstellt, die für ein beliebiges Element H aus dieser Menge folgende Form aufweisen:

$p(H \mid H') = p(H \mid U\ F\ K\ I\ J)$. (4.3.1)

Hierbei bezeichnen U, F, K, I und J Verbunde mit negierten, unnegierten oder '-gekennzeichneten Elementen entsprechend der Festlegung in Abschnitt 4.1.

Die Berechnung der Glg.(4.3.1) kann problemlos erfolgen, auch wenn die Verbunde U, F, K, I und J nicht alle Elemente der jeweils zugeordneten Mengen enthalten. Dies ist deshalb möglich, da die für eine Berechnung erforderliche Berücksichtigung aller Ursachen von H und aller Ursachen für Elemente aus F durch Erweiterungen gem. Glg.(4.2.8) erreicht wird.

Sollen jedoch die Zutreffenswahrscheinlichkeiten eines Kausalnetzes berechnet werden, und bezeichnet KAUSALNETZ einen Verbund aus allen (negierten, unnegierten oder '-gekennzeichneten) Ereignissen des Netzes, so gilt:

$$p(H \mid H') \ = \ p(H \mid KAUSALNETZ)$$

$$= \ p(H \mid U\ F\ K\ I\ J),$$

wobei jetzt vorausgesetzt ist, daß U, F, K, I und J alle diesen Verbunden zuzuordnenden Elemente des Kausalnetzes enthaltenen, daß weitere Elemente, die den Verbunden U und K zuzuordnen wären, nicht existieren, und daß durch U, F, K, I und J das Ereignis H von den übrigen Ereignissen des Kausalnetzes separiert wird. Da die hier gestellte Aufgabe die Berechnung eines entsprechend konstruierten Kausalnetzes ist, wird angenommen, daß diese Voraussetzungen erfüllt sind.

Zur Berechnung einer Wertungsgleichung in der Form der Glg.(4.3.1) werden schließlich die nachfolgenden Voraussetzungen I bis IV benötigt. Hierbei bezeichnen für ein beliebiges Ereignis H des Kausalnetzes:

FOL(H)      Menge der unmittelbaren Folge-Ereignisse von H.

DIFF(H)     Menge der von H verschiedenen Netzknoten, die unmittelbare Ursache für Elemente aus FOL(H) sind. ( DIFF(H) umfaßt diejenigen Netzknoten, die differentialdiagnostisch zu H in Betracht zu ziehen sind. Zu dieser Menge gehören auch die $\overline{\text{in K}}$ enthaltenen Ereignisse.)

Voraussetzung I:

$p(U\ F\ K\ I\ J \mid H) = p(U\ I \mid H)\cdot p(F\ K\ J \mid H)$.

$$p(U\ F\ K\ I\ J\ |\overline{H}) = p(U\ I\ |\ H)\cdot p(F\ K\ J\ |\ \overline{H}).$$

Voraussetzung II:

$$p(F_1...F_b\ |\ H\ K\ J) = p(F_1\ |\ H\ K\ J)\ ...\ p(F_b\ |\ H\ K\ J),$$

bei beliebiger Zutreffenswahrscheinlichkeit der Elemente in (H K J).
(Bemerkung: Die Voraussetzung II ergibt sich aus den Voraussetzungen III und IV.)

Voraussetzung III:

Für ein beliebiges Ereignis H des Kausalnetzes sind die Elemente der Vereinigungsmenge

$$\{H\}\ \cup\ \text{DIFF}(H)\ \cup\ \bigcup_{F\in\text{FOL}(H)}\ \text{INH}(F)$$

stochastisch unabhängig.

Voraussetzung IV:

Für ein beliebiges Ereignis A des Kausalnetzes sind die Elemente aus URS(A) selbstständige Ursachen von A.

Damit ergibt sich:

$$p(H\ |\ U\ F\ K\ I\ J)$$

$$= \frac{p(H\ U\ F\ K\ I\ J)}{p(H\ U\ F\ K\ I\ J)\ +\ p(\overline{H}\ U\ F\ K\ I\ J)}$$

$$= \frac{1}{1 + \dfrac{p(U\ F\ K\ I\ J\ |\ \overline{H})\cdot p(\overline{H})}{p(U\ F\ K\ I\ J\ |\ H)\cdot p(H)}}$$

$$\overset{(I)}{=} \frac{1}{1 + \dfrac{p(F\ K\ J\ \overline{H})\cdot p(U\ I\ |\ \overline{H})}{p(F\ K\ J\ H)\cdot p(U\ I\ |\ H)}}$$

$$= \frac{1}{1 + \dfrac{p(\overline{H}\ |\ F\ K\ J)\cdot p(H)\cdot p(\overline{H}\ |\ U\ I)}{p(H\ |\ F\ K\ J)\cdot p(\overline{H})\cdot p(H\ |\ U\ I)}}\ \cdot \qquad (4.3.2)$$

Für die weitere Berechnung unterscheidet man zwei getrennte Teile:
- Der Teil 1 besteht aus der Bestimmung von p(H | U I).

- Der umfangreichere Teil 2 betrifft die Berechnung von bedingten Wahrscheinlichkeiten mit beliebigen Elementen aus H , F, K und J. Solche Wahrscheinlichkeiten sind p(H | F K J), sowie die durch Anwendungen des allgemeinen Interpolationssatzes auftretenden Wahrscheinlichkeiten der Form

$$p(F_j \mid U_{F_j}).$$

Teil 1:

Die in Glg.(4.3.2) enthaltene bedingte Wahrscheinlichkeit p(H | U I) mit

$$(U\ I) := (U'_1\ ...\ U'_a\ I'_1\ ...\ I'_d)$$

wird wie folgt berechnet:

$$p(H \mid U'_1\ ...\ U'_a\ I'_1\ ...\ I'_d) \quad (III) \qquad = \qquad\qquad (4.3.3)$$

$$\sum_{q_1,...,q_a,r_1,...,r_\alpha = 0,1} p(H \mid U_1^{(q_1)} ... U_a^{(q_a)} I_1^{(r_1)} ... I_d^{(r_\alpha)}) \cdot$$

$$\cdot p(U_1^{(q_1)} \mid U'_1) ... p(U_a^{(q_a)} \mid U'_a) \cdot p(I_1^{(r_1)} \mid I'_1) ... p(I_d^{(r_\alpha)} \mid I'_d)$$

$$\text{mit } U^{(0)} = \overline{U}, U^{(1)} = U, I^{(0)} = \overline{I} \text{ und } I^{(1)} = I.$$

Die in Glg.(4.3.3) enthaltenen Wahrscheinlichkeiten der Form $p(H \mid U_1 ... U_a I_1 ... I_d)$ werden bei beliebigem Negierungsstatus der bedingenden Ereignisse in der durch die Glgn.(4.2.1) bis (4.2.9) vorgegebenen Weise ermittelt.

Teil 2:

Der in Glg.(4.3.2) noch enthaltene Ausdruck

$$p(H \mid F K J) := p(H \mid F'_1\ ...\ F'_b\ K'_1\ ...\ K'_c\ J'_1\ ...\ J'_e)$$

wird mittels Glg.(4.1.1) interpoliert. Die dabei auftretenden Ausdrücke der Form $p(F_1 ... F_b K_1 ... K_c J_1 ... J_e)$ werden gem. Glg.(4.2.8) erweitert, so daß der Verbund $(H K_1 ... K_c)$ alle Ursachen von $F_1, ..., F_b$ enthält. Die dadurch gewonnenen Wahrscheinlichkeiten werden analog zum nachfolgenden Beispiel der Glg.(4.3.4) in Wahrscheinlichkeiten kleineren Umfangs zerlegt. Es gilt:

$$p(H\ F_1\ ...F_b\ K_1\ ...K_c\ J_1\ ...J_e) \qquad\qquad (4.3.4)$$

$$=_{(III)}\ p(F_1\ ...F_b\ |\ H\ K_1\ ...K_c\ J_1\ ...J_e)\cdot p(H)\cdot p(K_1)\cdot\ ...\cdot p(K_c)\cdot$$

$$\cdot p(J_1)\cdot\ ...\cdot p(J_e)$$

$$=_{(II)}\ p(F_1\ |\ H\ K_1...K_c\ J_1...J_e)\ ...\ p(F_b\ |\ H\ K_1...K_c\ J_1...J_e)\cdot$$

$$\cdot p(H)\cdot p(K_1)\cdot\ ...\cdot p(K_c)\cdot p(J_1)\cdot\ ...\cdot p(J_e).$$

Die Glg.(4.3.4) kann dann wegen Voraussetzung IV mit den Glgn.(4.2.1) bis (4.2.7) weiter berechnet werden.

Die bei Anwendung von Glg.(4.1.1) auf p(H | F K J) außerdem auftretenden Ausdrücke sind:

$$\frac{p(E_i\ |\ E_i')}{p(E_i\ |\ V_{E_i})}\ :=\ \frac{p(E_i\ |\ E_i'')}{p(E_i)}\ ,$$

für $E_i'$

$$E_i'$$

aus K oder J, sowie

$$\frac{p(E_i\ |\ E_i')}{p(E_i\ |\ V_{E_i})}\ :=\ \text{Element aus}\ \left\{\frac{p(E_i\ |\ E_i')}{p(E_i\ |\ V_{E_i,max})}\ ,\ 1\ ,\ \frac{p(E_i\ |\ E_i')}{p(E_i)}\right\},$$

$$\text{für } E_i' \text{ aus } (F_1'...F_b').$$

Ergibt sich bei der Anwendung des allgemeinen Interpolationssatzes eine Wahrscheinlichkeit der Form

$$p(F_{j_o}\ |\ \text{Teilverbund von}\ (F_1'...F_{j_o}'...F_b'\ K\ J)) \qquad\qquad (*)$$

mit einem '-gekennzeichneten Element aus F im Bedingungsverbund, so wird dafür ein separater Berechnungsdurchlauf gestartet. Das bedeutet:

(i) Anwendung der Glg.(4.1.1) auf die Wahrscheinlichkeit (*) mit

$$\frac{p(E_i \mid E'_i)}{p(E_i \mid V_{E_i})} := \frac{p(E_i \mid E'_i)}{p(E_i)} ,$$

für $E'_i$ aus K oder J, sowie

$$\frac{p(E_i \mid E'_i)}{p(E_i \mid V_{E_i})} := \text{Element aus} \left\{ \frac{p(E_i \mid E'_i)}{p(E_i \mid V_{E_i,max})} , 1 , \frac{p(E_i \mid E'_i)}{p(E_i)} \right\} ,$$

$$\text{für } E'_i \text{ aus } (F'_1 ... \cancel{F'_{J_o}} ... F'_b).$$

(ii) Die bei Durchführung von (i) entstehenden Wahrscheinlichkeiten mit nicht '-gekennzeichneten Elementen aus F, K und J werden mittels der Glgn.(4.2.1) bis (4.2.8) bestimmt.

(iii) Enthält bei der Ausführung von (i) für ein beliebiges

$$F_{J_1} \in \{ F_1 , ... , \cancel{F_{J_o}} , ... , F_b \}$$

die Wahrscheinlichkeit

$$p(F_{J_1} \mid \text{Teilverbund von } (F'_1 ... \cancel{F'_{J_o}} ... \cancel{F'_{J_1}} ... F'_b \text{ K J}))$$

ein '-gekennzeichnetes Element aus F, so ist dafür erneut ein Berechnungsdurchlauf zu starten.

(iv) Die Wiederholung der Berechnungsschritte (i) bis (iii) bricht ab, wenn sich durch die Anwendung des allgemeinen Interpolationssatzes nur noch Wahrscheinlichkeiten ergeben, die keine '-gekennzeichneten Elemente aus F mehr aufweisen.

Dieses Vorgehen wird für alle m Netzknoten mit unbekannter Zutreffenswahrscheinlichkeit durchgeführt. Man erhält so m Gleichungen in den m Unbekannten $p(Y \mid Y')$, wenn Y einen mit unbekannter Zutreffenswahrscheinlichkeit vorliegenden Knoten des zu berechnenden Kausalnetzes bezeichnet.

Die Lösung des Gleichungssystems schließlich erfolgt iterativ, z.B. mit Hilfe des nichtlinearen Einzel- oder Gesamtschrittverfahrens.

### 4.4. Beispiel

Gegeben sei der nachfolgende Ausschnitt eines Kausalnetzes. Die mit Sicherheit vorliegenden bzw. nicht vorliegenden Netzknoten sind unnegiert bzw. negiert, während die Knoten mit unbekannter Zutreffenswahrscheinlichkeit eine ● -Kennung aufweisen.

Abb.4.4.1:

Beispiel eines Kausalnetzes. Die gewählten Bezeichnungen sind willkürlich, sie entsprechen jedoch den Symbolen der voranstehenden Abschnitte. Das Netz kann im Bedarfsfall beliebig fortgesetzt werden.

Uebereinstimmend mit Abb.4.4.1 gelten folgende Annahmen:

Die Netzknoten U1, I1, I2, K2, J1, J2, F1, F2, Z2 und Z3 liegen mit Sicherheit vor.

Die Netzknoten Z1, Z4, Z5 und Z6 liegen mit Sicherheit nicht vor.

Die Zutreffenswahrscheinlichkeiten der Knoten U2, U3, H, K1, K3, F3, F4 und F5 sind unbekannt.

Es wird die Wertungsgleichung für H aufgestellt. Netzknoten mit Einfluß auf die Zutreffenswahrscheinlichkeit von H sind die Ursachen von H, die Folge-Ereignisse von H, die Ursachen dieser Folge-Ereignisse, sowie alle Inhibitoren, die der Erzeugung von H oder eines Folge-Ereignisses von H entgegenwirken. Demzufolge lautet die Wertungsgleichung:

$$p(H \mid H') = p(H \mid U F K I J) \qquad (4.4.1)$$

mit

$$U := (U1\ U2'\ U3'),\ F := (F1\ F2\ F3'\ F4'\ F5'),$$
$$K := (K1'\ K2\ K3'),\ I := (I1\ I2),\ J := (J1\ J2).$$

Gem. Glg.(4.3.2) folgt weiter:

$$p(H \mid H') = \cfrac{1}{1 + \cfrac{p(\overline{H} \mid F\ K\ J) \cdot p(H) \cdot p(\overline{H} \mid U\ I)}{p(H \mid F\ K\ J) \cdot p(\overline{H}) \cdot p(H \mid U\ I)}} \cdot \qquad (4.4.2)$$

Teil 1: Berechnung von $p(H \mid U\ I)$.

Teil 2: Berechnung von $p(H \mid F\ K\ J)$ und den durch Anwendungen des allgemeinen Interpolationssatzes auftretenden Wahrscheinlichkeiten der Form

$$p(E_i \mid U_{E_i}).$$

Teil 1:

Für das in Glg.(4.4.2) enthaltene p(H | U I) erhält man wegen der stochastischen Unabhängigkeit der Ereignisse in (U I) mit Hilfe der linearen Interpolation:

$$p(H \mid U1\ U2'\ U3'\ I1\ I2)\ =\ \qquad\qquad (4.4.3)$$

$$p(H \mid U1\ U2\ U3\ I1\ I2)\cdot p(U2 \mid U2')\cdot p(U3 \mid U3')\ +$$

$$p(H \mid U1\ U2\ \overline{U3}\ I1\ I2)\cdot p(U2 \mid U2')\cdot p(\overline{U3} \mid U3')\ +$$

$$p(H \mid U1\ \overline{U2}\ U3\ I1\ I2)\cdot p(\overline{U2} \mid U2')\cdot p(U3 \mid U3')\ +$$

$$p(H \mid U1\ \overline{U2}\ \overline{U3}\ I1\ I2)\cdot p(\overline{U2} \mid U2')\cdot p(\overline{U3} \mid U3')\ .$$

Exemplarisch gilt für das im 1.Summanden der Glg.(4.4.3) stehende p(H |U1 U2 U3 I1 I2):

$$p(H \mid U1\ U2\ U3\ I1\ I2)\ =\ \qquad\qquad (4.4.4)$$

$$1\ -\ (1 - p(U1.H \mid U1))\cdot(1 - p(U2.H \mid U2))\cdot$$

$$\cdot (1 - p(U3.H \mid U3\ I1\ I2)).$$

Die in Glg.(4.4.4) enthaltenen Wahrscheinlichkeiten werden dann wie in Abschnitt 4.2 weiter bearbeitet.

Teil 2:

Auf den in Glg.(4.4.2) enthaltenen Ausdruck p(H | F K J) wird die Glg.(4.1.1) angewendet. In der dadurch erreichten Glg.(4.4.5) wird lediglich der jeweils 1.Summand des Zählers und Nenners angeschrieben. Man erhält:

$$p(H \mid F\ K\ J)\ =\ \qquad\qquad (4.4.5)$$

$$\cfrac{p(H\ F1\ F2\ F3\ F4\ F5\ K1\ K2\ K3\ J1\ J2)\cdot \dfrac{p(F3|F3')}{p(F3|V_{F3})}\cdot\dfrac{p(F4|F4')}{p(F4|V_{F4})}\cdot\dfrac{p(F5|F5')}{p(F5|V_{F5})}\cdot\dfrac{p(K1|K1')}{p(K1)}\cdot\dfrac{p(K3|K3')}{p(K3)}+\dots}{p(F1\ F2\ F3\ F4\ F5\ K1\ K2\ K3\ J1\ J2)\cdot \dfrac{p(F3|F3')}{p(F3|V_{F3})}\cdot\dfrac{p(F4|F4')}{p(F4|V_{F4})}\cdot\dfrac{p(F5|F5')}{p(F5|V_{F5})}\cdot\dfrac{p(K1|K1')}{p(K1)}\cdot\dfrac{p(K3|K3')}{p(K3)}+\dots} \dots$$

Für die Festlegung der

$$p(F_j \mid V_{F_j})$$

werden folgende Wahlmöglichkeiten wahrgenommen:

$$\frac{p(F3 \mid F3')}{p(F3 \mid V_{F3})} := 1,$$

wegen Wahlmöglichkeit II.

$$\frac{p(F4 \mid F4')}{p(F4 \mid V_{F4})} := \frac{p(F4 \mid F4')}{p(F4 \mid V_{F4,max})} = \frac{p(F4 \mid F4')}{p(F4 \mid F1\ F2\ F3'\ F5'\ K\ J)},$$

wegen Wahlmöglichkeit I.

$$\frac{p(F5 \mid F5')}{p(F5 \mid V_{F5})} := \frac{p(F5 \mid F5')}{p(F5)},$$

wegen Wahlmöglichkeit III.

Die letztgenannte Wahl läßt außerdem die Vereinfachungsmöglichkeit III zu, so daß K3' und J2 aus (K J) entfernt werden.

Man erhält so mit $V_{F4} := $ (F1 F2 F3' F5' K1' K2 J1):

$$p(H \mid F\ K\ J)\ = \tag{4.4.6}$$

$$\cfrac{
\begin{aligned}
&p(H\ F1\ F2\ F4\ F5\ K1\ K2\ J1)\cdot\frac{p(F4|F4')}{p(F4|V_{F4})}\cdot\frac{p(F5|F5')}{p(F5)}\cdot\frac{p(K1|K1')}{p(K1)}\ +\ \cdots\\[4pt]
&\quad\quad\cdots\\[4pt]
&p(H\ F1\ F2\ F4\ F5\ \overline{K1}\ K2\ J1)\cdot\frac{p(F4|F4')}{p(F4|V_{F4})}\cdot\frac{p(F5|F5')}{p(F5)}\cdot\frac{p(\overline{K1}|K1')}{p(\overline{K1})}\ +\ \cdots\\[4pt]
&\quad\quad\cdots\\[4pt]
&p(H\ F1\ F2\ F4\ \overline{F5}\ K1\ K2\ J1)\cdot\frac{p(F4|F4')}{p(F4|V_{F4})}\cdot\frac{p(\overline{F5}|F5')}{p(\overline{F5})}\cdot\frac{p(K1|K1')}{p(K1)}\ +\ \cdots\\[4pt]
&\quad\quad\cdots\\[4pt]
&p(H\ F1\ F2\ F4\ \overline{F5}\ \overline{K1}\ K2\ J1)\cdot\frac{p(F4|F4')}{p(F4|V_{F4})}\cdot\frac{p(\overline{F5}|F5')}{p(\overline{F5})}\cdot\frac{p(\overline{K1}|K1')}{p(\overline{K1})}\ +\ \cdots\\[4pt]
&\quad\quad\cdots\\[4pt]
&p(H\ F1\ F2\ \overline{F4}\ F5\ K1\ K2\ J1)\cdot\frac{p(\overline{F4}|F4')}{p(\overline{F4}|V_{F4})}\cdot\frac{p(F5|F5')}{p(F5)}\cdot\frac{p(K1|K1')}{p(K1)}\ +\ \cdots
\end{aligned}
}{
\begin{aligned}
&p(F1\ F2\ F4\ F5\ K1\ K2\ J1)\cdot\frac{p(F4|F4')}{p(F4|V_{F4})}\cdot\frac{p(F5|F5')}{p(F5)}\cdot\frac{p(K1|K1')}{p(K1)}\ +\ \cdots\\[4pt]
&\quad\quad\cdots\\[4pt]
&p(F1\ F2\ F4\ F5\ \overline{K1}\ K2\ J1)\cdot\frac{p(F4|F4')}{p(F4|V_{F4})}\cdot\frac{p(F5|F5')}{p(F5)}\cdot\frac{p(\overline{K1}|K1')}{p(\overline{K1})}\ +\ \cdots\\[4pt]
&\quad\quad\cdots\\[4pt]
&p(F1\ F2\ F4\ \overline{F5}\ K1\ K2\ J1)\cdot\frac{p(F4|F4')}{p(F4|V_{F4})}\cdot\frac{p(\overline{F5}|F5')}{p(\overline{F5})}\cdot\frac{p(K1|K1')}{p(K1)}\ +\\[4pt]
&\quad\quad\cdots\\[4pt]
&p(F1\ F2\ F4\ \overline{F5}\ \overline{K1}\ K2\ J1)\cdot\frac{p(F4|F4')}{p(F4|V_{F4})}\cdot\frac{p(\overline{F5}|F5')}{p(\overline{F5})}\cdot\frac{p(\overline{K1}|K1')}{p(\overline{K1})}\ +\ \cdots\\[4pt]
&\quad\quad\cdots\\[4pt]
&p(F1\ F2\ \overline{F4}\ F5\ K1\ K2\ J1)\cdot\frac{p(\overline{F4}|F4')}{p(\overline{F4}|V_{F4})}\cdot\frac{p(F5|F5')}{p(F5)}\cdot\frac{p(K1|K1')}{p(K1)}\ +
\end{aligned}
}\quad\Longrightarrow$$

$$p(H\ F1\ F2\ \overline{F4}\ F5\ \overline{K1}\ K2\ J1)\cdot\frac{p(\overline{F4}|F4')}{p(\overline{F4}|\underset{F4}{V})}\cdot\frac{p(F5|F5')}{p(F5)}\cdot\frac{p(\overline{K1}|K1')}{p(\overline{K1})}\ +$$

$$\cdots\ \frac{\ }{\ }\ \cdots$$

$$p(F1\ F2\ \overline{F4}\ F5\ \overline{K1}\ K2\ J1)\cdot\frac{p(\overline{F4}|F4')}{p(\overline{F4}|\underset{F4}{V})}\cdot\frac{p(F5|F5')}{p(F5)}\cdot\frac{p(\overline{K1}|K1')}{p(\overline{K1})}\ +$$

$$p(H\ F1\ F2\ \overline{F4}\ \overline{F5}\ K1\ K2\ J1)\cdot\frac{p(\overline{F4}|F4')}{p(\overline{F4}|\underset{F4}{V})}\cdot\frac{p(\overline{F5}|F5')}{p(\overline{F5})}\cdot\frac{p(K1|K1')}{p(K1)}\ +$$

$$\cdots\ \frac{\ }{\ }\ \cdots$$

$$p(F1\ F2\ \overline{F4}\ \overline{F5}\ K1\ K2\ J1)\cdot\frac{p(\overline{F4}|F4')}{p(\overline{F4}|\underset{F4}{V})}\cdot\frac{p(\overline{F5}|F5')}{p(\overline{F5})}\cdot\frac{p(K1|K1')}{p(K1)}\ +$$

$$p(H\ F1\ F2\ \overline{F4}\ \overline{F5}\ \overline{K1}\ K2\ J1)\cdot\frac{p(\overline{F4}|F4')}{p(\overline{F4}|\underset{F4}{V})}\cdot\frac{p(\overline{F5}|F5')}{p(\overline{F5})}\cdot\frac{p(\overline{K1}|K1')}{p(\overline{K1})}$$

$$\cdots\ \frac{\ }{\ }\ \cdots$$

$$p(F1\ F2\ \overline{F4}\ \overline{F5}\ \overline{K1}\ K2\ J1)\cdot\frac{p(\overline{F4}|F4')}{p(\overline{F4}|\underset{F4}{V})}\cdot\frac{p(\overline{F5}|F5')}{p(\overline{F5})}\cdot\frac{p(\overline{K1}|K1')}{p(\overline{K1})}$$

Die in Glg.(4.4.6) stehenden Wahrscheinlichkeiten der Form p(H F1 F2 F4 F5 K1 K2 J1) werden gem. Glg.(4.2.8) erweitert, so daß alle Ursachen von F1, F2, F4 und F5 erscheinen. Es folgt:

$$p(H\ F1\ F2\ F4\ F5\ K1\ K2\ J1)\ =\ \hspace{3cm}(4.4.7)$$

$$p(H\ F1\ F2\ F4\ F5\ K1\ K2\ J1\ K3)\ +\ p(H\ F1\ F2\ F4\ F5\ K1\ K2\ J1\ \overline{K3}).$$

Es folgt wegen Voraussetzung III:

$$p(H\ F1\ F2\ F4\ F5\ K1\ K2\ J1)\ =\ \hspace{3cm}(4.4.8)$$

$$p(F1\ F2\ F4\ F5|H\ K1\ K2\ K3\ J1)\cdot p(H)\cdot p(K1)\cdot p(K2)\cdot p(K3)\cdot p(J1)\ +$$

$$p(F1\ F2\ F4\ F5|H\ K1\ K2\ \overline{K3}\ J1)\cdot p(H)\cdot p(K1)\cdot p(K2)\cdot p(\overline{K3})\cdot p(J1).$$

Wegen Voraussetzung II folgt aus Glg.(4.4.8) weiter:

$$p(H\ F1\ F2\ F4\ F5\ K1\ K2\ J1)\ = \qquad\qquad (4.4.9)$$

$$p(F1\mid H\ K1)\cdot p(F2\mid H\ K1\ J1)\cdot p(F4\mid H\ K2)\cdot p(F5\mid H\ K3)\cdot$$

$$\cdot p(H)\cdot p(K1)\cdot p(K2)\cdot p(K3)\cdot p(J1)$$

$$+\ p(F1\mid H\ K1)\cdot p(F2\mid H\ K1\ J1)\cdot p(F4\mid H\ K2)\cdot p(F5\mid H\ \overline{K3})\cdot$$

$$\cdot p(H)\cdot p(K1)\cdot p(K2)\cdot p(\overline{K3})\cdot p(J1)\,.$$

Auf die bedingten Wahrscheinlichkeiten der Glg.(4.4.9) sind dann wegen Voraussetzung IV die Glgn.-(4.2.1) bis (4.2.7) anwendbar.

Für die Glg.(4.4.6) steht noch die Berechnung von $p(F4\mid V_{F4}) := p(F4\mid F1\ F2\ F3'\ F5'\ K1'\ K2\ J1)$ aus. Hier ist erneut ein Durchlauf des beschriebenen Verfahrens zu starten. Zunächst ist mittels Glg.(4.1.1) eine Interpolation bzgl. F3', F5' und K1' durchzuführen, wobei wegen Wahlmöglichkeit II wieder F3' entfällt, und wegen Wahlmöglichkeit III $p(F5\mid V_{F5}) := p(F5)$ gilt. Damit folgt:

$$p(F4 \mid F1\ F2\ F5'\ K1'\ K2\ J1) \quad = \qquad\qquad (4.4.10)$$

$$\frac{p(F4\ F1\ F2\ F5\ K1\ K2\ J1)\cdot\dfrac{p(F5|F5')}{p(F5)}\cdot\dfrac{p(K1|K1')}{p(K1)}\ +}{p(F1\ F2\ F5\ K1\ K2\ J1)\cdot\dfrac{p(F5|F5')}{p(F5)}\cdot\dfrac{p(K1|K1')}{p(K1)}\ +}\ ---$$

$$\frac{p(F4\ F1\ F2\ F5\ \overline{K1}\ K2\ J1)\cdot\dfrac{p(F5|F5')}{p(F5)}\cdot\dfrac{p(\overline{K1}|K1')}{p(\overline{K1})}\ +}{p(F1\ F2\ F5\ \overline{K1}\ K2\ J1)\cdot\dfrac{p(F5|F5')}{p(F5)}\cdot\dfrac{p(\overline{K1}|K1')}{p(\overline{K1})}\ +}\ ---$$

$$\frac{p(F4\ F1\ F2\ \overline{F5}\ K1\ K2\ J1)\cdot\dfrac{p(\overline{F5}|F5')}{p(\overline{F5})}\cdot\dfrac{p(K1|K1')}{p(K1)}\ +}{p(F1\ F2\ \overline{F5}\ K1\ K2\ J1)\cdot\dfrac{p(\overline{F5}|F5')}{p(\overline{F5})}\cdot\dfrac{p(K1|K1')}{p(K1)}\ +}\ ---$$

$$\frac{p(F4\ F1\ F2\ \overline{F5}\ \overline{K1}\ K2\ J1)\cdot\dfrac{p(\overline{F5}|F5')}{p(\overline{F5})}\cdot\dfrac{p(\overline{K1}|K1')}{p(\overline{K1})}}{p(F1\ F2\ \overline{F5}\ \overline{K1}\ K2\ J1)\cdot\dfrac{p(\overline{F5}|F5')}{p(\overline{F5})}\cdot\dfrac{p(\overline{K1}|K1')}{p(\overline{K1})}}\ \cdot$$

Die Wahrscheinlichkeiten der Form p(F4 F1 F2 F5 K1 K2 J1) werden mittels Glg.(4.2.8) erweitert und dann mit den Glgn.(4.2.1) bis (4.2.7) weiter bearbeitet. Erneute Interpolationen sind nicht erforderlich, da die Größen

$$p(E_i \mid \underset{i}{V} E_i)$$

der Glg.(4.4.10) keine '-gekennzeichneten Elemente mehr enthalten.

Das beschriebene Vorgehen des Aufstellens und Berechnens von Wertungsgleichungen wird für alle Netzknoten mit unbekannter Zutreffenswahrscheinlichkeit durchgeführt. Hierzu ist unter Umständen das Kausalnetz fortzusetzen. Sei etwa im vorliegenden Beispiel der Abb.4.4.1 der Knoten F1 das herausgehobene Leitsymptom, und sei weiter die Ermittlung der Wahrscheinichkeiten für die Leitsymptom-Ursachen die gestellte Aufgabe. Dann wird der Ausbau des Kausalnetzes so lange fortgeführt, bis abzuschätzen ist, daß neu hinzukommende Netzknoten nur noch eine geringen Einfluß auf die Zutreffenswahrscheinlichkeiten der Leitsymptom-Ursachen ausüben.

Sind alle Wertungsgleichungen erstellt, so ergibt sich für das Beispiel der Abb.4.4.1 ein Gleichungssystem in maximal 8 Unbekannten der Form p(Y|Y'), wenn Y einen Netzknoten mit unbekannter Zutreffenswahrscheinlichkeit bezeichnet. Die Lösung des Gleichungssystems erfolgt dann iterativ, z.B. mit Hilfe des nichtlinearen Einzel- oder Gesamtschrittverfahrens. Hierbei kann man als Startwert für eine beliebige Unbekannte p(Y | Y') denjenigen Zahlenwert verwenden, den man aus der Wertungsgleichung für Y durch die Entfernung der '-gekennzeichneten Ereignisse erhält.

**Patentansprüche**

1. Verfahren zur Ermittlung der Wahrscheinlichkeiten fehlerhafter Betriebszustände eines technischen oder biologischen Systems, dadurch gekennzeichnet, daß ein beliebiges Netz kausal verknüpfter Ereignisse zugrunde gelegt wird, dessen Kausalverbindungen in bekannter oder in nicht bekannter Weise inhibitorisch beeinflußt werden, und das beliebig viele Netzknoten mit unbekannter Zutreffenswahrscheinlichkeit enthält; für die m Netzknoten mit unbekannter Zutreffenswahrscheinlichkeit werden m sogenannte Wertungsgleichungen aufgestellt, die für einen beliebigen Netzknoten H die Form

$$p(H \mid H') = p(H \mid U \, F \, K \, I \, J)$$

aufweisen, wobei U, F, K, I und J Verbunde (synonym: Produkt, Durchschnitt) bezeichnen, die aus negierten, unnegierten oder '-gekennzeichneten, d.h. mit unbekannter Zutreffenswahrscheinlichkeit vorliegenden Ereignissen bestehen, und wobei gilt
   - U enthält alle unmittelbaren Ursachen von H,
   - F enthält die im Kausalnetz ausgewiesenen unmittelbaren Folge-Ereignisse von H,
   - K enthält alle unmittelbaren Ursachen für Elemente von F,
   - I enthält die im Kausalnetz ausgewiesenen Ereignisse, die auf H hinführende Kausalverbindungen inhibitorisch beeinflussen,
   - J enthält die im Kausalnetz ausgewiesenen Ereignisse, die auf Elemente von F hinführende Kausalverbindungen inhibitorisch beeinflussen;

das Verfahren ist weiter dadurch gekennzeichnet, daß mit den erforderlichen Voraussetzungen und ausgehend von der Gleichung

$$p(H \mid U \, F \, K \, I \, J) = \cfrac{1}{1 + \cfrac{p(\overline{H} \mid F \, K \, J) \cdot p(H) \cdot p(\overline{H} \mid U \, I)}{p(H \mid F \, K \, J) \cdot p(\overline{H}) \cdot p(H \mid U \, I)}}$$

zur Interpolation von p(H | U I) und p(H | F K J) der sogenannte allgemeine Interpolationssatz nebst Sonderformen eingesetzt wird, der in der allgemeinen Form lautet:

$E_1, \ldots, E_k$ seien Ereignisse mit

$$(1) \quad p_i = p(E_i \mid E_i') \in \{0,1\} \quad \text{für } i = 1, \ldots, h,$$

$$(2) \quad 0 \leq p(E_i \mid E_i') \leq 1 \quad \text{für } i = h+1, \ldots, k,$$

$$(3) \quad p(E_1' \ldots E_k') \neq 0,$$

$$\overset{\vee}{\underset{i}{E}}$$

sei ein beliebiger, auch leer zugelassener Teilverbund von

$$\langle E_1 \ldots E_h \ E'_{h+1} \ldots E'_{i-1} \ E'_{i+1} \ldots E'_k \rangle,$$

dann genügt die Gleichung

$$p(H \mid E_1^{(p_1)} \ldots E_h^{(p_h)} E'_{h+1} \ldots E'_k) =$$

$$\frac{\sum_{q_{h+1},\ldots,q_k=0,1} p(H \ E_1^{(p_1)} \ldots E_h^{(p_h)} E_{h+1}^{(q_{h+1})} \ldots E_k^{(q_k)}) \cdot \prod_{i=h+1}^{k} \frac{p(E_i^{(q_i)} \mid E'_i)}{p(E_i^{(q_i)} \mid V_{E_i})}}{\sum_{q_{h+1},\ldots,q_k=0,1} p(E_1^{(p_1)} \ldots E_h^{(p_h)} E_{h+1}^{(q_{h+1})} \ldots E_k^{(q_k)}) \cdot \prod_{i=h+1}^{k} \frac{p(E_i^{(q_i)} \mid E'_i)}{p(E_i^{(q_i)} \mid V_{E_i})}}$$

$$\text{mit } E_i^{(0)} = \overline{E}_i \quad \text{und} \quad E_i^{(1)} = E_i \quad \text{für } i = 1, \ldots, k,$$

den nachfolgenden drei Interpolationspunkten, wobei der 1.Interpolationspunkt durch

$$p(H \mid E_1 \ldots E_h \ E'_{h+1} \ldots E'_i \ldots E'_k) = p(H \mid E_1 \ldots E_h \ E'_{h+1} \ldots \overline{E}_i \ldots E'_k)$$

für

$$p(E_i \mid E'_i) = 0,$$

$i = h+1, \ldots, k$,

der 2.Interpolationspunkt durch

$$p(H \mid E_1 \ldots E_h \ E'_{h+1} \ldots E'_i \ldots E'_k) = p(H \mid E_1 \ldots E_h \ E'_{h+1} \ldots E_i \ldots E'_k)$$

für

$$p(E_i \mid E'_i) = 1,$$

$i = h+1,\ldots, k,$

der 3.Interpolationspunkt durch

$$p(H \mid E_1 \ldots E_h E'_{h+1} \ldots E'_i \ldots E'_k) = p(H \mid E_1 \ldots E_h E'_{h+1} \ldots E'_i \ldots E'_k)$$

für

$$p(E_i \mid E'_i) = p(E_i \mid V_{E_i}),$$

$i = h+1,\ldots, k$

festgelegt ist, und wobei die

$$V_{E_i}$$

beliebig gewählt werden können und so eine Vielzahl unterschiedlicher Interpolationen ermöglichen; das Verfahren ist als nächstes dadurch gekennzeichnet, daß zur weiteren Berechnung von $p(H \mid U \, I)$ und $p(H \mid F \, K \, J)$ genutzt wird,

- daß für ein beliebiges Folge-Ereignis H und den Verbund $U := (U_1 \ldots U_a)$ aus allen seinen Ursachen die Beziehung

$$p(H \mid U_1 \ldots U_a \, I) = p(U_1.H \, v \ldots v \, U_a.H \mid U_1 \ldots U_a \, I)$$

gilt, wobei $U_i.H$, $i = 1,\ldots,a$ den kausalen Vorgang "$U_i$ erzeugt H" bezeichnet,
- und daß für einen beliebigen kausalen Vorgang $U_1.H$ und die darauf inhibitorisch wirkenden Ereignisse $I_1,\ldots,I_x$ gilt

$$p(U_1, H \mid U_1 I_1 \ldots I_x) =$$

$$\frac{\dfrac{p(H \mid I_1) - p(H \mid \overline{U}_1) \cdot p(\overline{U}_1)}{p(U_1)} - p(H \mid \overline{U}_1)}{p(H \mid U_1) - p(H \mid \overline{U}_1)} \cdot \ldots$$

$$\frac{\dfrac{p(H \mid I_x) - p(H \mid \overline{U}_1) \cdot p(\overline{U}_1)}{p(U_1)} - p(H \mid \overline{U}_1)}{p(H \mid U_1) - p(H \mid \overline{U}_1)} \cdot \frac{p(H \mid U_1) - p(H \mid \overline{U}_1)}{p(\overline{H} \mid \overline{U}_1)} ;$$

das Verfahren ist abschließend dadurch gekennzeichnet, daß man für alle im Kausalnetz enthaltenen m Knoten mit unbekannter Zutreffenswahrscheinlichkeit die zugehörigen Wertungsgleichungen in dieser Weise bearbeitet, daß man dann die m Gleichungen in den m Unbekannten p(Y|Y'), wenn Y die Bezeichnung eines Knotens mit unbekannter Zutreffenswahrscheinlichkeit ist, nach gängigen Verfahren löst, und daß man bei einer iterativen Lösung, z.B. bei Verwendung des nichtlinearen Einzel- oder Gesamtschrittverfahrens, als Startwert für eine beliebige Unbekannte p(Y|Y') denjenigen Zahlenwert verwendet, den man aus der Wertungsgleichung für Y durch die Entfernung der '-gekennzeichneten Ereignisse erhält.

2. Anwendung des Verfahrens gemäß Anspruch 1 für den Fall, daß die im allgemeinen Interpolationssatz erscheinenden Ausdrücke

$$p(E_i \mid V_{E_i}),$$

i = h + 1,...,k, dadurch festgelegt werden, daß für Ereignisse E$_i$ aus K oder J

$$\frac{p(E_i \mid E'_i)}{p(E_i \mid V_{E_i})} := \frac{p(E_i \mid E'_i)}{p(E_i)}$$

gesetzt wird, und daß mit der Bezeichnung

$$V_{E_i, max} :=$$

(Bedingungsverbund der zu berechnenden Wahrscheinlichkeit ohne E )
für Ereignisse $E_i$ aus F der Quotient

$$\frac{p(E_i \mid E_i')}{p(E_i \mid V_{E_i})} \qquad \text{(abgekürzt: } Q_i\text{)}$$

durch die Anwendung der nachfolgenden drei Auswahlkriterien bestimmt wird, wobei,

(Wahlmöglichkeit I)

falls

$$p(E_i \mid E_i') > p(E_i \mid V_{E_i,max}),$$

dann

$$Q_i := \frac{p(E_i \mid E_i')}{p(E_i \mid V_{E_i,max})}$$

gesetzt wird, mit einer als erfüllt geltenden Prämisse, wenn die Kausalstruktur außer den in

$$V_{E_i,max}$$

enthaltenen Elementen noch solche Ereignisse aufweist, daß der eben dadurch auf $E_i$ ausgeübte aufgegenüber dem abwertenden Einfluß überwiegt, und wobei,

(Wahlmoglichkeit II)
falls

$$p(E_i) \leq p(E_i \mid E_i') \leq p(E_i \mid V_{E_i,max}),$$

dann $Q_i := 1$
gesetzt wird, mit einer als erfüllt geltenden Prämisse, wenn die Kausalstruktur außer den in

$$V_{E_i,max}$$

enthaltenen Elementen noch solche Ereignisse aufweist, daß der eben dadurch auf $E_i$ ausgeübte ab- gegenüber dem aufwertenden Einfluß überwiegt, ohne daß insgesamt die a priori-Wahrscheinlichkeit p-($E_i$) unterschritten wird, und wobei,

(Wahlmöglichkeit III)

falls

$$p(E_i \mid E'_i) < p(E_i) \ ,$$

dann

$$Q_i := \frac{p(E_i \mid E'_i)}{p(E_i)}$$

gesetzt wird, mit einer als erfüllt geltenden Prämisse, wenn die Kausalstruktur solche Ereignisse aufweist, daß der insgesamt auf $E_i$ ausgeübte ab- gegenüber dem aufwertenden Einfluß überwiegt, so daß die a priori-Wahrscheinlichkeit p($E_i$) unterschritten wird.

3. Anwendung des Verfahrens gemäß Anspruch 1 und 2 für den Fall, daß Interpolationen dadurch erreicht werden,
   - daß Sonderformen des allgemeinen Interpolationssatzes, der sogenannte L-Satz, die lineare Interpolation bei Unabhängigkeit der bedingenden Ereignisse und die sogenannte lineare $V_{max}$ - Interpolation bei nur einem unsicheren Ereignis verwendet werden,
   - daß die im allgemeinen Interpolationssatz erscheinenden Größen

$$V_{E_i} \ ,$$

i = h + 1,...,k, durch beliebige Teilverbunde von

$$(E_1 ...E_h \ E'_{h+1} ...E'_k),$$

oder daß die

$$p(E_i \mid V_{E_i})$$

durch relle Zahlenwerte $r_i$ , $0 < r_i \leqq 1$ ersetzt werden,
   - oder daß eine Interpolationsformel der Form

39

$$p(H \mid E_1^{(p_1)} \ldots E_h^{(p_h)} E'_{h+1} \ldots E'_k) =$$

$$\sum_{q_{h+1}, \ldots, q_k = 0,1} p(H \mid E_1^{(p_1)} \ldots E_h^{(p_h)} E_{h+1}^{(q_{h+1})} \ldots E_k^{(q_k)}) \cdot \prod_{i=h+1}^{k} p(E_i^{(q_i)} \mid E'_i)$$

verwendet wird, auch wenn keine oder nur eine ungefähre stochastische Unabhängigkeit der bedingenden Ereignisse besteht.

**4.** Anwendung des Verfahrens gemäß Anspruch 1, 2 und 3 für den Fall, daß nicht von der Gleichung

$$p(H \mid U F K I J) = \cfrac{1}{1 + \cfrac{p(\overline{H} \mid F K J) \cdot p(H) \cdot p(\overline{H} \mid U I)}{p(H \mid F K J) \cdot p(\overline{H}) \cdot p(H \mid U I)}}$$

ausgegangen wird, sondern von einer beliebigen anderen Umformung von p(H | U F K I J ), und daß die gemäß Anspruch 1, 2 und 3 auszuführenden charakteristischen Rechenoperationen, nämlich
- die Anwendung des allgemeinen Interpolationssatzes nebst Sonderformen,
- die Anwendung der Beziehung

$$p(H \mid U_1 \ldots U_a I) = p(U_1.H \vee \ldots \vee U_a.H \mid U_1 \ldots U_a I)$$

und des A.L-Satzes bzw. des A.L-Korollars, sowie
- die Anwendung der Beziehungen

$$p(U_1.H \mid U_1 I_1 \ldots I_x)$$

$$= \frac{p(U_1.H \mid U_1 I_1)}{p(U_1.H \mid U_1)} \cdot \ldots \cdot \frac{p(U_1.H \mid U_1 I_x)}{p(U_1.H \mid U_1)} \cdot \frac{p(H \mid U_1) - p(H \mid \overline{U}_1)}{p(\overline{H} \mid \overline{U}_1)}$$

und

$$\frac{p(U_1.H \mid U_1 I_1)}{p(U_1.H \mid U_1)} = \frac{\cfrac{p(H \mid I_1) - p(H \mid \overline{U}_1) \cdot p(\overline{U}_1)}{p(U_1)} - p(H \mid \overline{U}_1)}{p(H \mid U_1) - p(H \mid \overline{U}_1)}$$

dann so ausgeführt werden, daß sie auf die Ausdrücke einer beliebig gestalteten Umformung von p(H |U F K I J) in beliebiger Anzahl und in beliebiger Reihenfolge angewendet werden.

5. Anwendung des Verfahrens gemäß Anspruch 1, 2, 3 und 4 für den Fall, daß F, I und J nicht alle im Kausalnetz ausgewiesenen Ereignisse enthalten, und daß U und K nicht alle Ursachen von H, bzw. nicht alle Ursachen für Elemente aus F aufweisen, da es stets gelingt, den Mangel nicht vollzählig berücksichtigter Ursachen dadurch zu beheben, daß man z.B. für eine beliebige Wahrscheinlichkeit $p(F_1 U_1)$, die nicht alle Ursachen $U_1,...,U_a$ von $F_1$ enthält, die einfache Erweiterung

$$p(F_1 U_1) = \sum_{q_2,...,q_a = 0,1} p(F_1 U_1 U_2^{(q_2)} ... U_a^{(q_a)})$$

anwendet.

6. Anwendung des Verfahrens gemäß Anspruch 1, 2, 3, 4 und 5 für den Fall: daß kein Kausalnetz mit inhibitorisch beeinflußten Kausalverbindungen und/oder Netzknoten unbekannter Zutreffenswahrscheinlichkeit zugrunde gelegt wird, daß die Verbunde U, F, K, I oder J zusätzlich oder ausschließlich Ereignisse aufweisen, die (in der Notation des allgemeinen Interpolationssatzes) für beliebiges i aus $h + 1,...,k$ eine Zutreffenswahrscheinl ichkeit $0 \leq p_i \leq 1$ mit bekanntem Zahlenwert besitzen, oder daß U, F, K, I und J ausschließlich sichere Ereignisse enthalten.

7. Anwendung der Verfahren nach Anspruch 1, 2, 3, 4, 5 und 6 für den Bereich Humanmedizin, Tiermedizin und Biologie, für den betriebs- und volkswirtschaftlichen Bereich, sowie für den Bereich der Psychologie und der Sport- bzw. Gesundheitswissenschaft zur Erstellung von
   - Diagnose-Expertensystemen,
   - Diagnose-Unterstützungssystemen,
   - Expertensystemen für die Bestimmung von Wahrscheinlichkeiten kausal verknüpfter Ereignisse,
   - Expertensystemen für die Bestimmung von Wahrscheinlichkeiten kausaler Vorgänge A.B, wobei p(A.B | A) die Wahrscheinlichkeit von "A erzeugt B unter der Bedingung des Vorliegens von A" bezeichnet,
   - Expertensystemen für die Bearbeitung von Fragestellungen hinsichtlich der Verursachung eines pathologischen Zustands und hinsichtlich des Prognostizierens pathologischer Entwicklungen.

8. Anwendung der Verfahren nach Anspruch 1, 2, 3, 4, 5 und 6 für den Bau und den Betrieb von Computern zur Berechnung der Wahrscheinlichkeiten fehlerhafter Betriebszustände bei technischen und industriellen Anlagen anhand der festgestellten Merkmale, inbesondere zur Berechnung der Wahrscheinlichkeiten fehlerhafter Betriebszustände bei Computersystemen, sowie zur Erkennung der unbefugten Benutzung solcher Systeme.

9. Anwendung der Verfahren nach Anspruch 1, 2, 3, 4, 5 und 6 für den Bau und den Betrieb von Computern zur Berechnung der Wahrscheinlichkeit, daß bei einem technischen oder biologischen System ein beliebiger Systemzustand A, der auch mit einer Wahrscheinlichkeit kleiner Eins vorliegen darf, einen als mögliche Folge in Betracht kommenden Systemzustand B erzeugt, sowie zur Berechnung der Wahrscheinlichkeit einer beliebigen, aus solchen kausalen Erzeugungsvorgängen zusammengesetzten Kausalkette, insbesondere für epidemiologische Fragestellungen hinsichtlich des Verursachers eines pathologischen Zustands und hinsichtlich des Prognostizierens pathologischer Entwicklungen, sowie für pharmakologische Fragestellungen hinsichtlich der Wirkungen von Arzneimitteln.

10. Sind für alle Knoten eines Kausalnetzes die Zutreffenswahrscheinlichkeiten bestimmt, so kann für einen beliebigen Netzknoten L und einen beliebigen, L-verursachenden Knoten A die Wahrscheinlichkeit dafür bestimmt werden, daß A das Ereignis L erzeugt, auch wenn A mit einer Wahrscheinlichkeit $0 \leq p(A |A')$ $\leq 1$ vorliegt, indem man den A.L-Satz bzw. das A.L-Korollar zusammen mit dem allgemeinen Interpolationssatz verwendet, so daß die '-gekennzeichneten Elemente bearbeitet werden können, wie bei

$$p(A.L \mid A' \; J'_1...J'_x) \;=\; p(A \mid A') \cdot$$

$$\cdot \sum_{q_1,...,q_x = 0,1} p(A.L \mid A \; J_1^{(q_1)}...J_x^{(q_x)}) \cdot \prod_{i=1}^{x} p(J_i^{(q_i)} \mid J'_i)$$

wobei $J_1,...,J_x$ die Inhibitoren von A.L bezeichnen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 400 354 (LIEBEL, FRANZ-PETER) 5. Dezember 1990 --- | | G06F15/36 G06F15/40 G06F9/44 |
| A | ARTIFICIAL INTELLIGENCE Bd. 29, Nr. 3, September 1986, AMSTERDAM, THE NETHERLANDS Seiten 241 - 288; JUDEA PEARL: 'FUSION, PROPAGATION, AND STRUCTURING IN BELEF NETWORKS' --- | | |
| A | IBM TECHNICAL DISCLOSURE BULLETTIN Bd. 24, Nr. 4, September 1981, NEW YORK, US Seiten 2038 - 2041; L.R.BAHL ET AL: 'INTERPOLATION OF ESTIMATORS DERIVED FROM SPARSE DATA' --- | | |
| A | PROCEEDINGS OF EUSIPCO-88 : "SIGNAL PROCESSING IV: THEORIES AND APPLICATIONS" Bd. III, 5. September 1988, GRENOBLE, FRANCE Seiten 1089 - 1095; J.N.MAKSYM ET AL: 'SIGNAL INTERPRETATION VIA BAYES' NETWORK UPDATING' --- | | **RECHERCHIERTE SACHGEBIETE (Int. Cl.5)** |
| A | IBM TECHNICAL DISCLOSURE BULLETTIN Bd. 28, Nr. 6, November 1985, NEW YORK, US Seiten 2599 - 2601; 'DETERMINING THE PROBABILITY OF WORDS IN A STRING WITH A WORD-SKIPPING MODEL' --- | | G06F |
| A | PROCEEDING OF THE SECOND CONFERENCE ON ARTIFICIAL INTELLIGENCE APPLICATIONS, "THE ENGINEERING OF KNOWLEDGE-BASED SYSTEMS" 11. Dezember 1985, MIAMI BEACH, FLORIDA, US Seiten 313 - 319; S.I.GALLANT: 'AUTOMATIC GENERATION OF EXPERT SYSTEMS FROM EXAMPLES' ----- | | |

Der vorliegende Recherchenbericht wurde für alle Patentansprüche erstellt

| Recherchenort | Abschlußdatum der Recherche | Prüfer |
|---|---|---|
| DEN HAAG | 20 DEZEMBER 1991 | BARBA M. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument